(19) 

**Europäisches Patentamt**

**European Patent Office**

**Office européen des brevets**

(11) **EP 4 664 142 A1**

(12) **EUROPEAN PATENT APPLICATION**

(43) Date of publication:
**17.12.2025 Bulletin 2025/51**

(21) Application number: **25172705.3**

(22) Date of filing: **25.04.2025**

(51) International Patent Classification (IPC):
**G01S 7/02** $^{(2006.01)}$ **G01S 7/41** $^{(2006.01)}$
**G06N 3/088** $^{(2023.01)}$

(52) Cooperative Patent Classification (CPC):
**G01S 7/021; G01S 7/417; G06N 3/04; G06N 3/045;
G06N 3/08; G06N 3/084; G06N 3/088; G06N 20/00**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **11.06.2024 DE 102024116309**

(71) Applicant: **Airbus Defence and Space GmbH
82024 Taufkirchen (DE)**

(72) Inventor: **ZISKE, Roman
82024 Taufkirchen (DE)**

(74) Representative: **LKGLOBAL
Lorenz & Kopf Patentanwalt
Attorney at Law PartG mbB
Brienner Straße 11
80333 München (DE)**

(54) **METHOD AND SYSTEM FOR CLASSIFYING THE SIMILARITY OF RADIO SIGNALS IN SIGNALS INTELLIGENCE**

(57) A method for classifying the similarity of radio signals in signals intelligence is disclosed, comprising receiving signal data comprising a plurality of data elements, wherein each data element comprises at least two components, mapping the signal data to a representation in a latent vector space to generate a feature extraction, aggregating the dimension of the feature extraction to a predetermined dimension smaller than the dimension of the feature extraction to generate a unique feature map, and determining a similarity measure of the feature map with respect to another feature map. Furthermore, a system for classifying the similarity of radio signals is disclosed, consisting of a receiving module for signal data, an extraction module for representation in a latent vector space, an aggregation module for reduction to a predetermined dimension, and a classification module for determining a similarity measure.

Fig. 1

**Description**

The present disclosure relates to the data analysis and data processing of radio signals, in particular in electronic reconnaissance. In particular, with regard to automated processing and classification of signal information.

The detection of radio signals is an important task for both civil and military applications, as the accurate and timely classification of signals and/or identification of unknown signals is an essential part of signals intelligence.

Specific transmitter identification can be defined as the process of identifying radio transmitters by extracting unique features from the measurements of their transmitted signals.

**In** conventional signals intelligence, radar signals can be classified on the basis of conventional parameters or features such as pulse width, pulse repetition interval, radio frequency, antenna scanning type/period and modulation onto the pulse. Nevertheless, the challenges of classifying transmitters, especially radar devices, using conventional techniques are increasing, because the number of emitters and their complexity is increasing significantly. Furthermore, transmission systems can comprise active measures to impair detection and classification performance.

Accordingly, received signal vectors can have high complexity, which leads to high dimensionality of the signal vectors. Accordingly, processing the signal vectors using conventional analysis methods can require increased computing power and lead to efficiency losses. Furthermore, the signals may have high variability due to different ambient conditions and different reception and/or transmission platforms, which can affect classification.

It can be considered one object to provide a method and system for efficient detection and recognition of individual emitters or groups of similar emitters on the basis of specific features or combinations of features.

In accordance with a first aspect, the present disclosure relates to a method for classifying the similarity of radio signals in signals intelligence. The method comprises receiving signal data comprising a plurality of data elements. Each data element can comprise at least two components. Furthermore, the method can comprise mapping the signal data to a representation in a latent vector space to generate a feature extraction.

The method can comprise the method step of aggregating the dimension of the feature extraction to a predetermined dimension smaller than the dimension of the feature extraction to generate a unique feature map. Moreover, the method can comprise determining a similarity measure of the feature map with respect to another feature map.

Signal data can generally relate to information transmitted by changes in a physical medium, e.g. by electromagnetic waves during radio transmission. The signal data can be represented in the form of data series that reflect various aspects of the original signal.

The signal data may in particular be IQ data comprising in-phase and quadrature components to represent the amplitude and phase of a signal. Advantageously, each data element comprises exactly two signal components. In vector form, the I and Q components can be represented as mutually orthogonal vectors in a two-dimensional space. The length of the vector can indicate the amplitude and the angle to the horizontal axis can indicate the phase of the signal. Alternatively, the IQ data can be represented as a matrix, each row representing a time and the two columns representing the I and Q components at that time.

Receiving signal data can refer to the arrival of data consisting of a series of data elements. Each data element can comprise at least two components, especially in-phase and quadrature components, as basic constituents of IQ data. The data can be received directly from a signal detector and/or read from a database, in particular comprising IQ data. The database can have annotated data sets that can be used as training data for the feature extraction. Alternatively, the feature extraction can be produced using non-indexed and/or non-annotated data.

The feature extraction takes the signal data as input and can generate a feature map. In this step, relevant features can be identified from the signal data. In particular, this allows a more informative and/or more structured data set to be created for analysis. The feature extraction can be controlled by a parameter set. The parameter set can be used to determine the features to be extracted from the data.

A feature extraction model can be described in the form of a function $f_\theta$ with parameters $\theta$. A feature extraction $y_\theta$ can be generated that comprises the extracted features of the signal data: $y_\theta = f_\theta(x)$.

After the features have been extracted, they can be reduced to a predetermined dimension smaller than the original dimension of the feature extraction. With this step, a unique feature vector can be generated, which can also be called a signal fingerprint. Various aggregation functions, such as min, average and max pooling, and also more complex methods such as LSTM autoencoders, can be implemented to achieve dimension reduction. An autoencoder, in particular an LSTM autoencoder as part of the aggregation function, can be used to take account of temporal and spectral features.

The feature extraction can be based in particular on machine learning. The feature extraction can be considered a primary step in a multi-step process used to obtain relevant information from the signals, and can be prepared for classification.

The projection of signals into a high-dimensional latent vector space makes it possible to capture the inherent structures and relationships within the data, which may not be apparent in the original measurements. In this space, signals can be represented as points or vectors, the distance between them being a measure of their similarity. This similarity measure or distance dimension can be used as a basis for deciding to which class a particular signal can be assigned.

In particular due to the complexity of the signals contained in the signal data, a machine-learning-based method can advantageously be used. This can reduce in particular the influence of signal artefacts, signal noise and/or signal interference on signal classification. In particular, multi-dimensional patterns can be recognized to permit accurate classification of the signals. Accordingly, the feature extraction can be based on a convolutional neural network (CNN), a recurrent neural network (RNN), a generative adversarial network (GAN) and/or other network architectures.

A similarity measure for the feature map can be determined in comparison with other feature maps. The similarity measure can be a function that quantifies how similar two data points, or signal vectors, are to each other. In the context of signal vectors, the similarity measure can determine the proximity or similarity between the represented signals.

For example, the similarity measure can be based on a pairwise cosine distance, which measures the angle between two vectors, i.e. two feature maps. Values close to 1 indicate high similarity.

The aggregation function $\text{agg}(y_\theta)$ can generate a representation $z_\theta \in R^d$ that can advantageously be a single feature vector. This prevents further aggregation or reduction of the dimension. The feature vector $z_\theta$, or the feature map, can be used as a basis for the further steps, in particular signal classification and/or signal clustering.

For example, the aggregation function can comprise a principal component analysis. The dimensionality of the signal data can be reduced by virtue of a predetermined number of first principal components forming the representation $z_\theta$. These can accordingly map a predetermined part of the variance of the original signal data, or of the original feature extraction. According to one embodiment, the method can comprise selecting specific vector components. The selection can be described by an aggregation model. The selection of the components can determine a balance between information loss and complexity reduction.

Furthermore, t-Distributed Stochastic Neighbor Embedding (t-SNE), for example, can be used for dimensional aggregation. Aggregating the feature extraction can comprise combining similar and/or redundant features. In particular, the method can comprise a similarity analysis of the features to determine a similarity and/or redundancy of the features among themselves.

According to one embodiment, the dimension of the feature map can be reduced to a vector form. The unique feature map can correspond to a representation in the latent vector space.

Reduction of the dimensionality of a signal to a vector can be seen as a central step in the similarity analysis of the signal with respect to further signals, which can be used in particular to achieve an increase in efficiency. High-dimensional data in their original form can lead to increased computational load. Reduction to a vector allows resource requirements to be advantageously reduced, thus increasing the efficiency of applicable systems.

Furthermore, the dimension reduction can be used to achieve increased model accuracy. Superfluous or irrelevant features can affect model performance. Focusing on key features through reduction can improve prediction accuracy. There is also the risk of overfitting, as the model comprising too many features can be matched to training data too specifically. This can reduce the model's ability to generalize for new data. In particular, the advantage of robust signal classification can be achieved.

A feature reduction can be used to reduce the data to a predetermined structure, which allows specific features to be highlighted and made accessible for signal analysis, in particular a signal comparison. This can be used to simplify the analysis process, in particular right through to automation.

Furthermore, data points in high-dimensional spaces may be so widely scattered that analytical methods fail. Reduction to a vector can increase the density of data points to enable cluster-based analysis.

Reducing the dimensionality furthermore allows a storage space reduction to be achieved, and so faster data transfers can also be made. This is particularly relevant for realtime applications where signal identification and/or signal classification take place immediately.

Low-dimensional data can moreover be more easily visualized, facilitating visual interpretation or image-based similarity analysis.

In one advantageous embodiment, the method can furthermore comprise storing the unique feature map in an indexed vector database. Moreover, the method can comprise indexing the unique feature map by means of a graph-based algorithm.

Graph-based indexing can comprise using multi-layered graph structures for efficient approximation searching in the latent vector space. Furthermore, the index may be adaptable, in particular adaptable without changing the data structure, or without applying a complete reorganization. Furthermore, high data and connection processing speeds allow efficient scalability of the method to large volumes of data to be achieved.

As an example of graph-based indexing, hierarchical navigable small worlds (HNSW) indexing can be used. HNSW indexing can be used to produce an efficient similarity search in the vector space. Furthermore, HNSW indexing is compatible with embeddings from neural networks. The HNSW indexing can comprise multi-layered graphs. In particular, these can be used to produce fast queries.

The HNSW algorithm can have two phases: generate and search. During generation, the vector data can be indexed in such a way that it is subsequently possible to efficiently search for nearest neighbors. The search can take place in a hierarchical structure, and so the search can be performed in a logarithmic time complexity range.

Indexing can comprise using a flat index. A flat index can be based on the k-nearest neighbors (kNN) algorithm. With a flat index, the vectors can be stored without additional structuring or hierarchy. The vectors can be searched sequentially.

The flat index can be used in particular for local testing of the similarity search. This can be an alternative to a more complex HNSW structure, and so a direct and immediate comparison method can be applied. This can be used to verify the basic functionality and performance of the similarity search before more complex indexing methods are implemented.

Determining a similarity measure can comprise determining a distance dimension of the unique feature map with respect to other feature maps in the latent vector space.

The similarity search in the latent vector space can be based on the comparison of data points represented as vectors in a high-dimensional space.

In a first step of the similarity search, unknown signals, or signal data, can be marked. For example, the signal can be marked in an IQ frame that can serve as a reference point for the feature extraction and subsequent embedding of the signal. Using a similarity measure allows the proximity or distance between signal vectors to be quantified and thus classification or grouping to be carried out.

A similarity search can be performed on the basis of the feature extraction that represents the signal in the latent vector space. For example, a k-nearest neighbor (kNN) algorithm can be used that searches for the k nearest neighbors of the feature map on the basis of a distance dimension. For example, a pairwise cosine distance can be calculated as the distance dimension, which determines a distance between the feature map and each additional feature map in a data structure.

The similarity measure can be determined according to the type of signal data. For example, a Euclidean distance can be determined:

$$d(p,q) = \sqrt{\sum_{i=1}^{n}(p_i - q_i)^2}$$

Here, p and q are two points in space and ( n ) is the dimension of the vector space.

According to one embodiment, a cosine distance can be determined as the similarity measure, which measures the cosine of the angle between two vectors:

$$d(p,q) = \frac{p \cdot q}{|p||q|}$$

According to another embodiment, a Manhattan distance can be used as the distance dimension, wherein the sum of the absolute differences of the coordinates of the points is calculated:

$$d(p,q) = \sum_{i=1}^{n}|p_i - q_i|$$

According to another embodiment, a Mahalanobis distance can be used as the distance dimension, which takes into account the correlation between the variables and can thus compensate for different scaling of the signal data:

$$d(p,q) = \sqrt{(p-q)^T C^{-1}(p-q)}$$

Here, C is the covariance matrix of the data points.

Alternatively, according to another embodiment, a Jaccard index can be calculated, which measures the concordance between two sets and can be defined as the size of the intersection divided by the size of the union of the two sets:

$$J(A,B) = \frac{|A \cap B|}{|A \cup B|}$$

Here, ($|A \cap B|$) is the number of elements that are included both in set ( A ) and in set ( B ), and ($|A \cup B|$) is the number of elements in the union of sets ( A ) and ( B ). With regard to signal vectors, when these are represented as sets of features or indicators, the Jaccard index can indicate what proportion of the features is common in both signal vectors.

The method can furthermore comprise classifying the unique feature map on the basis of the distance dimension.

For example, classifying can comprise designating a signal vector with a unique signal designation. For this purpose, an existing designator index can be used, for example. Alternatively, designators can be generated iteratively, for example per feature extraction. A designator can be created on the basis of characteristic and/or significant elements of a feature extraction and/or a group of feature extractions. Advantageously, the classification can be created on the basis of characteristic and/or significant elements of a feature map and/or a group of feature maps. A characteristic and/or significant element can be determined on the basis of the distance dimension. In particular, an element that has a predetermined minimum proximity to existing feature maps can be a characteristic element. Furthermore, a plurality of characteristic features can be determined. Classifying can be used to produce an automated signal designation, in particular an evolving one. Advantageously, it is possible to dispense with training the feature extraction using designated signal data.

Feature maps within a predetermined volume, or within a parameterized similarity specification, of the latent vector space can have the same designation. Furthermore, a designation can be provided using multiple designators. The classification can accordingly have a plurality of classification levels, in particular hierarchical classification levels. Accordingly, a differentiated classification can be achieved, which classifies feature maps into signal classes and/or associated subclasses of a signal class.

According to an advantageous embodiment, classifying can comprise assigning the unique feature map to a signal class on the basis of a shortest distance of the feature map from the signal class among a plurality of distances of the feature map from signal classes.

A signal class can be based on a group of signals that have similar features. The distance in this context can refer to a defined similarity measure, or distance dimension, that defines the feature map relative to other feature maps.

A signal class can be defined by one or more signal vectors. In particular, the signal vectors of one signal class may have a predetermined distance from another group of signal vectors of another signal class. A signal class can furthermore be produced by a prototype signal vector, or a prototype feature map. A prototype feature map can correspond to a real signal vector. Alternatively, the prototype feature map can be a virtual feature map formed from a plurality of real feature maps. For example, the prototype feature map may be an average of signal vectors or a weighted mean of signal vectors assigned to the signal class.

In one embodiment, the method can comprise forming a signal class on the basis of the unique feature maps. The unique feature map can be at a predetermined minimum distance from other unique feature maps.

A signal class can be formed on the basis of a group of a predetermined number of unique feature maps. The group can be at a predetermined minimum distance from other unique feature maps. The method can consider each signal vector as a point in the latent vector space. The vector space can be structured in such a way that similar signals are close to each other.

If a plurality of feature maps are within a defined distance, for example a radius, the plurality of feature maps can be identified as a group of similar signals. The signal proximity can be determined by a distance dimension, in particular the cosine similarity.

The method can further comprise a newly formed signal group being at a minimum distance from other signal vectors or signal groups. This ensures distinguishability between different groups.

The method can further comprise new signal groups being able to be generated on the basis of the spatial arrangement of the vectors. These groups can represent clusters of signals with similar properties. In particular, this allows signal pattern recognition to be implemented. Accordingly, an identified signal pattern can serve as a basis for classifying the signal data, or the feature maps. Furthermore, signal anomalies can be detected that can be used as a basis for identifying new patterns and/or signal groups.

Furthermore, the method can include the use of generative models, for example variational autoencoders (VAEs) or generative adversarial networks (GANs). The method can be used to analyze complex signal data by using an inherent structure of the data in the latent space to carry out meaningful grouping and classification.

The method can comprise adapting the vector database on the basis of an access and/or signal data pattern.

This can be used to perform a dynamic adaptation function of the vector database, which is controlled, for example, by a set of rules that automatically adapts the structure of the database on the basis of usage and access patterns to optimize the performance and reaction speed of the signal classification. The signal database can comprise an autotuning function designed to automatically create, delete and/or modify indexes. This can be implemented on the basis of an analysis of the input data, i.e. the signal data, and/or on the basis of a usage, for example a query frequency, and/or analysis patterns.

The similarity measure can be determined immediately after the feature map is created, to provide a realtime classification of the signal data.

A realtime similarity measure can be provided that assesses the similarity between data points immediately as soon as signal data are available, or received. This can permit quick decisions on the basis of the classified data.

In accordance with a second aspect, the present disclosure relates to a computer program product. The computer program product can comprise a computer-readable medium containing instructions that can be executed by a classification system that may be designed to receive and analyze signal data. The instructions, when executed by the classification system, can cause the classification system to carry out the method according to one of the embodiments in accordance with the first aspect.

In accordance with a third aspect, the present disclosure relates to a computer-readable data carrier comprising a non-transitory computer-readable medium. A computer program in accordance with the second aspect may be stored on the medium. The computer program, when executed by a classification system, can cause the classification system to carry out the method according to one of the embodiments in accordance with the first aspect.

In accordance with a fourth aspect, the present disclosure relates to a system for classifying the similarity of radio signals in signals intelligence. The system can comprise a receiving module that may be designed to receive signal data comprising a plurality of data elements. Each data element comprises at least two components, advantageously exactly two components.

Furthermore, the system can comprise an extraction module that may be designed to map the signal data to a representation in a latent vector space to generate a feature extraction.

The system can comprise an aggregation module that may be designed to aggregate the dimension of the feature extraction to a predetermined dimension. The dimension can be smaller than the dimension of the feature extraction to generate a unique feature map.

The system can comprise a classification module that may be designed to determine a similarity measure of the feature map with respect to another feature map.

According to one embodiment, the aggregation module can use minimum pooling, maximum pooling or average pooling as aggregation functions.

The use of minimum pooling comprises determining a minimum value from a predetermined value range of the vector space to create a reduced feature map. Accordingly, signal aspects with low amplitude values and/or small value differences compared to noise can be highlighted.

The use of max pooling comprises selecting a maximum value from a predetermined value range of the vector space. Accordingly, features with high gradients, for example abrupt amplitude or frequency changes, can be detected.

The use of average pooling comprises calculating an average value for predetermined value ranges of the vector space to create a reduced value range.

The aggregation module can comprise a neural network that may be designed to perform the dimension reduction of the feature extraction.

The neural network may in particular be an autoencoder comprising an encoder and a decoder. Accordingly, the encoder may be designed to compress the input data into a lower-dimensional space. The decoder may be designed to reconstruct the original signal data from the compressed representation.

An autoencoder can be used in the context of signal data, in particular radar data, to extract essential features and at the same time reduce noise. Furthermore, the autoencoder may be designed to take a high reconstruction error as a basis for detecting a signal anomaly, i.e. a deviation from a known signal and/or a known signal category. The autoencoder can be an LSTM autoencoder.

According to one embodiment, the system can comprise a database module that may be designed to store the unique feature map in an indexed vector database. The classification module may be designed to determine paired distance dimensions between the unique feature map and each stored additional unique feature map in the vector database. Furthermore, the classification module may be designed to output a stored unique feature map that has the smallest distance dimension in relation to the unique feature map.

According to another embodiment, the classification module may be designed to determine a signal classification of a plurality of stored unique feature maps, wherein the plurality of stored unique feature maps are within a predetermined maximum distance of each other.

Embodiments of the invention are explained below for illustrative purposes with reference to the figures. The figures show schematic representations of the essential components of the system for classifying the similarity of radio signals that are explained in the description of the invention. Each figure is designed in such a way that it clarifies the functioning and relationships of the individual modules and method steps.

In the figures:

Fig. 1 shows a schematic illustration of the method of the invention according to one embodiment;

Fig. 2 shows a schematic illustration of the system according to one embodiment; and

Fig. 3 shows a schematic illustration of a signal cluster projection according to one embodiment of the invention.

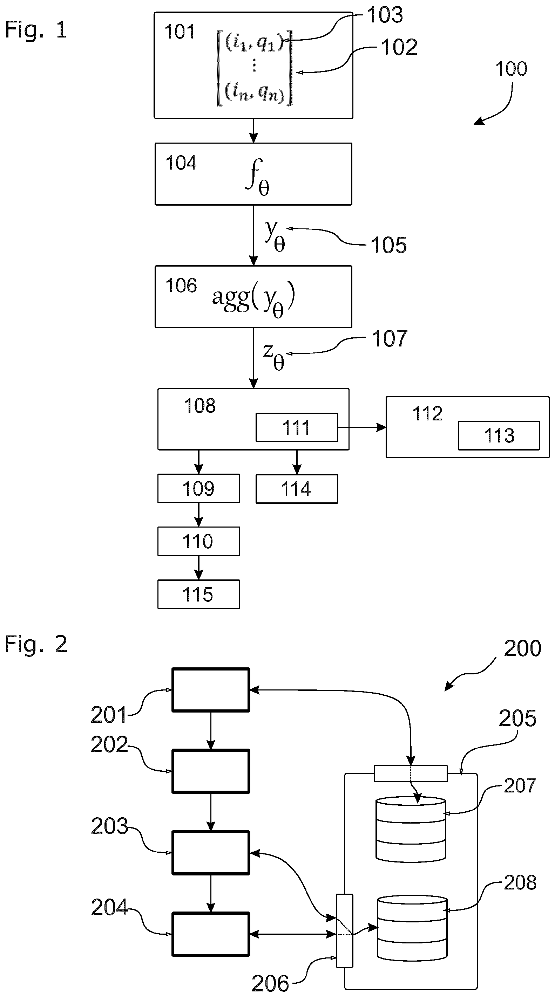

Fig. 1 shows, according to one embodiment, a schematic illustration of the method 100 for classifying the similarity of radio signals in signals intelligence, which integrates the transmission of information by physical media, such as electromagnetic waves, in a systematic process. The received signal data 102, represented as a data series $\begin{bmatrix} i_1, q_1 \\ \dots \\ i_n, q_n \end{bmatrix}$, reflect the aspects of the original signal. In particular, IQ data are used. Each data element 103 consists of these two signal components, which are mapped in a two-dimensional space as orthogonal vectors.

Receiving 101 the signal data 102 can comprise receiving from a detector and/or reading from a database. The feature extraction is controlled by a parameter set $\theta$ that defines the features to be extracted. A feature extraction model, described by the function $f_\theta$ with parameters $\theta$, generates the feature extraction 105, $y_\theta = f_\theta(x)$.

After extraction 104, the feature extraction 105 is reduced 106 to a predetermined dimension to generate the feature map 107 ($z_\theta$), the signal fingerprint. Aggregation functions such as pooling methods or LSTM autoencoders can be used to achieve dimension reduction and to take into account temporal and spectral features.

The projection of the signal data into a latent vector space captures the inherent structures and relationships within the signal data. In this space, the signal data can be represented as points or vectors, the distance between them being able to indicate their similarity. A machine-learning-based method can be used to parameterize the complexity of the signal data and minimize the influence of artefacts, noise and interference. Multi-dimensional patterns are recognized to permit precise classification. Feature extraction can be based on network architectures such as CNN, RNN, or GAN.

The similarity measure for the feature map 107 is determined 108 in comparison with other feature maps and can be based on a pairwise cosine distance.

The feature map 107 ($z_\theta$) forms the basis for signal classification and signal clustering. The aggregation model can describe the selection of specific vector components to find a balance between information loss and complexity reduction.

Determining 108 a similarity measure may be supplemented by determining 111 a distance dimension of the feature map 107 with respect to other feature maps in the latent vector space. This permits a precise assessment of the proximity or distance between the signal representations.

The feature map 107 is classified 112 on the basis of the determined distance dimension. This allows the association of a signal with a specific signal class to be determined. The method can further provide for classifying 112 to involve assigning 113 the feature map 107 to a signal class, wherein the selection is made on the basis of the shortest distance from the respective signal class. Accordingly, each signal can be assigned to the most appropriate category.

In addition, the method can comprise forming 114 a signal class on the basis of the feature map 107, wherein a predetermined minimum distance from other feature maps is observed. Accordingly, clearly delimited signal classes can be defined that permit robust classification.

Furthermore, the method can comprise adapting 115 the vector database, which is carried out in particular on the basis of an access and/or signal data pattern. This adaptability ensures that the database can react dynamically to changes in the signals or in usage behavior. Accordingly, an efficiency and/or accuracy of the classification system can be improved further.

Determining 108 the similarity measure can be performed immediately after the feature map is created, to permit a realtime classification of the signal data. This prompt process can produce fast reaction times.

Fig. 2 shows a schematic illustration of a system 200 according to one embodiment.

The system 200 comprises a receiving module 201 for receiving signal data and an extraction module 202 that transforms the received signal data into a representation within a latent vector space. This transformation permits a feature extraction to be performed for identifying and classifying signals. The aggregation module 203 reduces the dimension of the extracted features to a predetermined size to generate a unique and efficiently processable feature map that forms the basis for the subsequent classification.

The classification module 204 determines a similarity measure between the generated feature map and other available feature maps. This module can use various aggregation functions to maximize the effectiveness of the feature map.

Another element of the system 200 can be a database module 205 that stores the feature map in an indexed vector database 208. The classification module 204 may additionally be designed to calculate paired distance dimensions between the stored feature map and each additional feature map in the database 208. On the basis of these distance dimensions, the classification module 204 can output the feature map that has the smallest distance dimension, and thus represents the most accurate concordance with the desired signal characteristic.

The database module 205 can have an interface 206, in particular a database interface, that is designed to provide the aggregation module 203 and/or the classification module 204 with access to the vector database 208. In one advantageous embodiment, the database module 205 may be designed to comprise a signal database 207. The signal database can comprise a plurality of signal data sets that can be processed by the system 200 to generate a plurality of corresponding feature maps in the vector database 208. For communication between the receiving module 201 and the database module 205, there can be provision for another interface that allows the receiving module 201 to access the signal database 207. Alternatively, the signal database 207 may be included in a standalone database module.

The classification module 204 may furthermore be able to determine a signal classification for a plurality of stored feature maps. This classification can be based on the fact that the stored feature maps are within a predetermined maximum distance of each other.

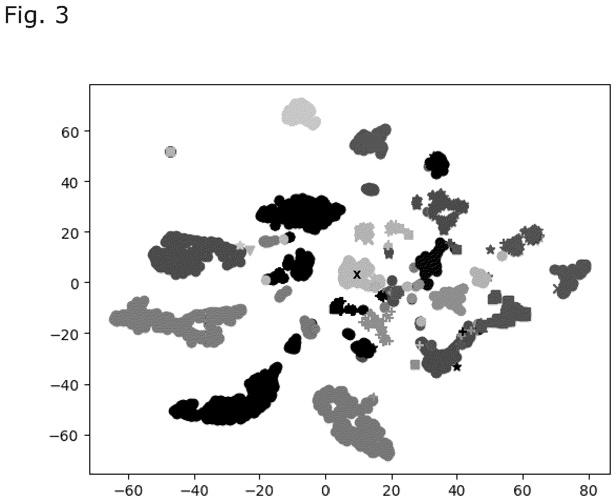

Fig. 3 shows a schematic illustration of a projection of vector data into a two-dimensional space.

The system uses the feature maps (embeddings) to index a multiplicity of signals in a data structure. This structure allows visualization of the signals in a latent vector space, with clusters of different signal types forming.

When searching for an unknown IQ signal, said signal is marked in the IQ frame and processed by the pipeline (feature extraction, dimension reduction) to obtain the embedding, or the unique feature map, of the marked signal. The classification can determine the k most similar signals, which can then be visualized. In Fig. 3, an exemplary signal is marked by "x", which corresponds to a certain signal class represented by the surrounding signal cluster. From the visualization it can be seen that the signal x is assigned to the correct cluster.

The feature maps of acquired signals, especially of IQ raw data, can be processed without added metadata. In an analysis, unknown signals in a projection in the feature space can accordingly fall into a signal cluster, i.e. a signal class, and so a graphical assignment, or identification, can also be produced. Clusters can result from a plurality of feature maps with similar and/or identical feature properties. In particular, the signal clusters are based on automatically extracted signal characteristics. This automatically moves from syntax to semantics without requiring additional manual editing. The similarity search can be continuously optimized, especially as data increase, and so the system automatically scales. The more signals are assessed, the better an automatic search, or classification, can take place.

The high-dimensional signal classes are projected as examples onto the two-dimensional map shown, and so the signals can be represented as points in a coordinate system. The x-axis and y-axis here can correspond to any parameter scaling, or may be defined by a selected metric, in particular a distance metric. The proximity of the points to each other can represent the similarity of the signals. Similarly, clustering can indicate groups of signals with similar properties. Accordingly, the graph shown is able not only to show the spatial distribution of the signals in the latent space, but also to indicate the effectiveness of the classification system in assigning signals to the correct categories.

## Claims

1. A method (100) for classifying the similarity of radio signals in signals intelligence, the method comprising the following:

   receiving (101) signal data (102) comprising a plurality of data elements (103), wherein each data element (103) comprises at least two components;
   mapping (104) the signal data (102) to a representation in a latent vector space to generate a feature extraction (105);
   aggregating (106) the dimension of the feature extraction (105) to a predetermined dimension smaller than the original dimension of the feature extraction (105) to generate a feature map (107);
   determining (108) a similarity measure of the feature map (107) with respect to another feature map.

2. The method (100) as claimed in claim 1, wherein the dimension of the feature map (107) is reduced to a vector form and the feature map (107) corresponds to a representation in the latent vector space.

3. The method (100) as claimed in either of the preceding claims, comprising:

   storing (109) the feature map (107) in an indexed vector database (208); and
   indexing (110) the feature map (107) by means of a graph-based algorithm.

4. The method (100) as claimed in one of the preceding claims, wherein determining (108) a similarity measure comprises:
   determining (111) a distance dimension of the feature map (107) with respect to other feature maps in the latent vector space.

5. The method (100) as claimed in claim 4, comprising:
   classifying (112) the feature map (107) on the basis of the distance dimension.

6. The method (100) as claimed in claim 5, wherein classifying (112) comprises assigning (113) the feature map (107) to a signal class on the basis of the shortest distance from the signal class.

7. The method (100) as claimed in claim 4, comprising:
   forming (114) a signal class on the basis of the feature map (107), wherein the feature map (107) is at a predetermined minimum distance from other feature maps.

8. The method (100) as claimed in claim 3, comprising:
   adapting (115) the vector database (208) on the basis of an access and/or signal data pattern.

9. The method (100) as claimed in one of the preceding claims, wherein the similarity measure is determined (108) immediately after the feature map (107) is created, to provide a realtime classification of the signal data.

10. A computer program product comprising:

    a computer-readable medium containing instructions that can be executed by a classification system that is designed to receive and analyze signal data,
    wherein the instructions, when executed by the classification system, cause the classification system to carry out the method as claimed in one of claims 1 to 9.

11. A computer-readable data carrier comprising a non-transitory computer-readable medium, wherein a computer program as claimed in claim 10 is stored on the medium, wherein the computer program, when executed by a classification system, causes the classification system to carry out the method as claimed in one of claims 1 to 9.

**12.** A system (200) for classifying the similarity of radio signals in signals intelligence, comprising:

a receiving module (201) that is designed to receive signal data comprising a plurality of data elements, wherein each data element comprises at least two components;
an extraction module (202) that is designed to map the signal data to a representation in a latent vector space to generate a feature extraction;
an aggregation module (203) that is designed to aggregate the dimension of the feature extraction to a predetermined dimension smaller than the dimension of the feature extraction to generate a feature map;
a classification module (204) that is designed to determine a similarity measure of the feature map with respect to another feature map.

**13.** The system (200) as claimed in claim 12, wherein the aggregation module (203) uses minimum pooling, maximum pooling or average pooling as aggregation functions.

**14.** The system (200) as claimed in either of claims 12 and 13, comprising a database module (205) that is designed to store the feature map in an indexed vector database (208), wherein the classification module (204) is designed to determine paired distance dimensions between the feature map (107) and each stored additional feature map in the vector database (208), and wherein the classification module (204) is designed to output a stored feature map that has the smallest distance dimension in relation to the feature map (107).

**15.** The system (200) as claimed in one of claims 12 to 14, wherein the classification module (204) is designed to determine a signal classification of a plurality of stored feature maps, wherein the plurality of stored feature maps are within a predetermined maximum distance of each other.

Fig. 1

Fig. 2

Fig. 3

**EUROPEAN SEARCH REPORT**

Application Number

EP 25 17 2705

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 113 971 440 A (PLA AIR FORCE AVIATION UNIV) 25 January 2022 (2022-01-25) <br> * abstract * <br> * figures 1-7 * <br> ----- | 1-15 | INV. <br> G01S7/02 <br> G01S7/41 <br> G06N3/088 |

TECHNICAL FIELDS
SEARCHED     (IPC)

G01S
G06N

The present search report has been drawn up for all claims

| Place of search | Date of completion of the search | Examiner |
|---|---|---|
| Munich | 11 September 2025 | Kruck, Peter |

CATEGORY OF CITED DOCUMENTS

X : particularly relevant if taken alone
Y : particularly relevant if combined with another
     document of the same category
A : technological background
O : non-written disclosure
P : intermediate document

T : theory or principle underlying the invention
E : earlier patent document, but published on, or
     after the filing date
D : document cited in the application
L : document cited for other reasons
...............................................................................
& : member of the same patent family, corresponding
     document

EPO FORM 1503 03.82 (P04C01)

## ANNEX TO THE EUROPEAN SEARCH REPORT
## ON EUROPEAN PATENT APPLICATION NO.

EP 25 17 2705

This annex lists the patent family members relating to the patent documents cited in the above-mentioned European search report.
The members are as contained in the European Patent Office EDP file on
The European Patent Office is in no way liable for these particulars which are merely given for the purpose of information.

11-09-2025

| Patent document cited in search report | Publication date | Patent family member(s) | Publication date |
|---|---|---|---|
| CN 113971440 A | 25-01-2022 | NONE | |

EPO FORM P0459

For more details about this annex : see Official Journal of the European Patent Office, No. 12/82